# DEMANDE DE BREVET EUROPEEN

(11) **EP 0 633 418 A1**
(43) Date de publication de la demande: **11.01.1995**
(21) Numéro de dépôt: 94470020.2
(22) Date de dépôt: 04.07.1994
(51) Int. Cl.: F16L 47/00, F16L 37/248

(54) **Dispositif de raccordement entre un bout uni métallique et un tube en matière plastique**

(30) Priorité: 09.07.1993 FR 9308515
(71) Demandeur: PONT-A-MOUSSON S.A., F-54000 Nancy (FR)
(72) Inventeur: Favier, Noel, F-54380 Dieulouard (FR); Maire, François, F-54121 Vandieres (FR); Begard, Denis, F-54000 Nancy (FR)
(74) Mandataire: Puit, Thierry

(57) **Abrégé**

Ce dispositif de raccordement comprend :
- des premiers moyens de fixation (10) solidaires de l'accessoire de canalisation métallique (1);
- un embout de liaison (3) en matière plastique comportant une tulipe (12) adaptée pour s'emboîter sur le bout uni (8);
- des moyens (4, 14) assurant l'étanchéité entre la tulipe et le bout uni; et
- une douille (5) adaptée pour coiffer la tulipe, cette douille comprenant d'une part une collerette intérieure (15) de retenue de l'embout (3), coopérant avec l'épaulement d'extrémité (13) de la tulipe, et d'autre part des seconds moyens de fixation (16) adaptés pour coopérer avec les premiers moyens de fixation.

Application à l'insertion d'un corps de vanne en fonte dans une canalisation en polyéthylène haute densité.

## Description

La présente invention est relative à un dispositif de raccordement d'un bout uni d'un accessoire de canalisation métallique à un tube en matière plastique. Elle s'applique en particulier à l'insertion d'un corps de vanne en fonte dans une canalisation en polyéthylène haute densité (PEHD).

Dans le présent mémoire, on appelle "tube" un élément de tuyauterie ayant une extrémité cylindrique lisse.

L'insertion d'un corps de vanne ou d'un autre accessoire de canalisation (coude, té de raccordement,..) dans une canalisation ou un réseau de canalisations en matière plastique présente l'avantage de rigidifier cette canalisation ou ce réseau. Elle s'effectue généralement de manière indirecte en utilisant un embout de liaison en matière plastique, qui est d'un côté solidarisé mécaniquement avec l'accessoire de canalisation métallique et, de l'autre côté, soudé ou collé bout à bout sur l'extrémité du tube à raccorder, ou relié à cette extrémité par un manchon.

L'invention a pour but de permettre de réaliser une telle insertion de manière optimale, c'est-à-dire en remplissant les conditions suivantes :
(a) ne pas alourdir ni rendre substantiellement plus coûteux l'accessoire de canalisation métallique;
(b) permettre de réaliser facilement, sans outillage spécial, l'assemblage in situ ainsi que son démontage;
(c) ne pas réduire la section de passage de fluide;
(d) utiliser un nombre de pièces minimal; et
(e) obtenir une bonne stabilité du dispositif dans le temps, même s'il est soumis, en service, à des conditions relativement sévères telles que des variations de température répétées.

A cet effet, l'invention a pour objet un dispositif de raccordement comprenant :
- des premiers moyens de fixation solidaires de l'accessoire de canalisation métallique;
- un embout de liaison en matière plastique comportant une tulipe adaptée pour s'emboîter sur le bout uni;
- des moyens assurant l'étanchéité entre la tulipe et le bout uni; et
- une douille adaptée pour coiffer la tulipe, cette douille comprenant d'une part une collerette intérieure de retenue de l'embout, coopérant avec l'épaulement d'extrémité de la tulipe, et d'autre part des seconds moyens de fixation adaptés pour coopérer avec les premiers moyens de fixation.

Ce dispositif peut comporter une ou plusieurs des caractéristiques suivantes:
- les premiers et seconds moyens de fixation définissent un système à baïonnette;
- le système à baïonnette est complété par des moyens interdisant positivement la rotation inverse de la douille;
- les moyens assurant l'étanchéité comprennent une gorge ménagée dans la paroi intérieure de la tulipe et une garniture annulaire d'étanchéité logée dans cette gorge;
- le dispositif comprend en outre une manchette de protection enserrant la douille et les parties adjacentes de l'accessoire de canalisation et de l'embout;
- l'accessoire de canalisation est un corps de vanne en fonte en forme générale de T, avec ledit bout uni à l'extrémité d'une branche du T.

Un exemple de réalisation de l'invention va maintenant être décrit en regard du dessin annexé, sur lequel :
- la Figure 1 est une vue en coupe longitudinale d'un dispositif de raccordement conforme à l'invention; et
- la Figure 2 est une vue partielle prise en coupe suivant la ligne II-II de la Figure 1.

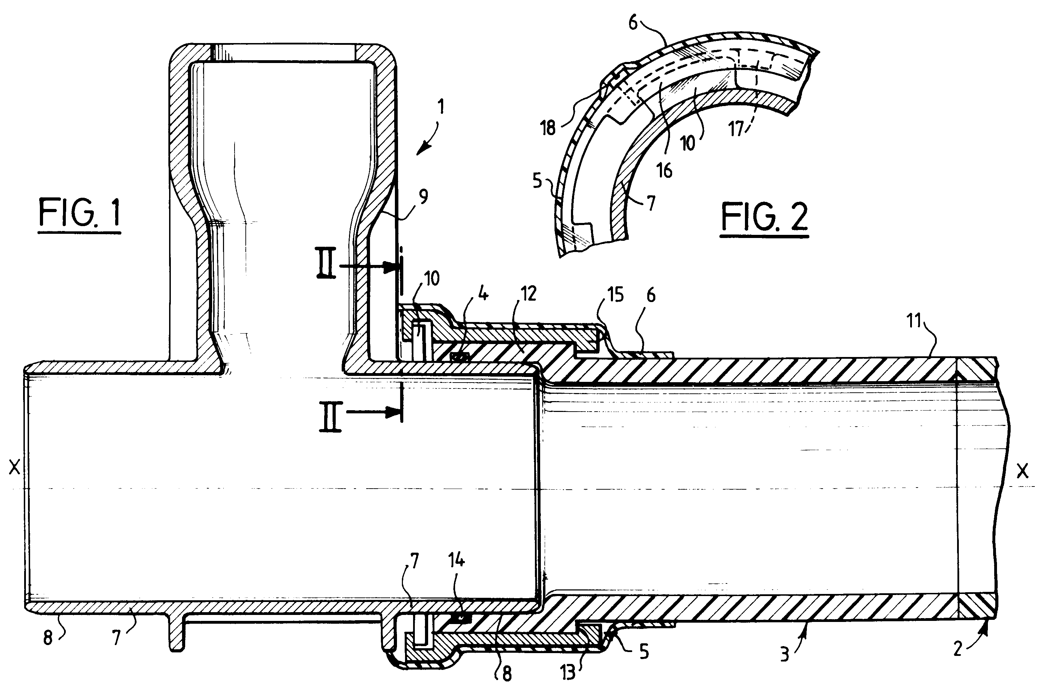

Le dispositif de raccordement représenté aux Figures 1 et 2 est destiné à raccorder un corps de vanne 1 en fonte à un tube 2 en PEHD. Il est constitué d'un embout de liaison 3 muni d'une garniture d'étanchéité 4, d'une douille 5 de retenue de l'embout, et d'une manchette de protection 6.

Le corps de vanne 1 a une forme générale en T, avec deux branches coaxiales 7 se terminant chacune par un bout uni 8 extérieurement chanfreiné, et une hampe 9 recevant l'obturateur (non représenté) de la vanne. On supposera ce corps orienté comme représenté, avec l'axe X-X des branches 7 horizontal et la hampe 9 dirigée ver le haut.

Le corps 1 ne diffère d'un corps de vanne classique à deux bouts unis que par l'ajout, près de la racine de l'une des deux branches 7 (la branche de droite sur la Figure 1), de plusieurs oreilles coplanaires 10 dont la face intérieure, c'est-à-dire tournée vers la hampe 9, forme une rampe hélicoïdale.

L'embout 3 est un tuyau en PEHD réalisé en usine. Il comporte une extrémité cylindrique lisse 11 identique à l'extrémité adjacente du tube 2, et, à l'autre extrémité, une tulipe 12 adaptée pour s'emboîter avec un petit jeu sur le bout uni 8. Cette tulipe, qui peut être réalisée par usinage ou formage ou rapportée, notamment par soudage, définit un épaulement radial 13 à sa jonction avec la partie courante de l'embout, et, près de son extrémité libre, une gorge circulaire 14 est usinée dans sa paroi intérieure. Par ailleurs, la tulipe 12 peut comporter des reliefs extérieurs, non représentés, destinés à faciliter son entraînement en rotation.

La douille 5 comporte une partie courante cylindrique munie à une extrémité d'une collerette intérieure 15 ayant une face intérieure radiale, et, à l'autre extrémité, de plusieurs pattes d'accrochage 16 dirigées radialement vers l'intérieur.

L'étendue angulaire de chaque patte est légèrement inférieure à l'intervalle angulaire séparant les oreilles 10 du corps de vanne. La face intérieure des pattes 16 est conformée en une rampe hélicoïdale.

Le raccordement du corps de vanne 1 au tube 2 s'effectue de la manière suivante, par exemple in situ.

La garniture 4 étant logée dans la gorge 14, l'embout est enfilé sur le bout uni 8, puis la douille 5 est enfilée de droite à gauche sur l'embout et, par rotation de la douille, les pattes 16 sont accrochées par effet baïonnette derrière les oreilles 10. Après une rotation prédéterminée de la douille, un relief 17 (Figure 2) prévu derrière une griffe 16 bute contre une oreille 10, et la rotation inverse de la douille est empêchée par une vis 18 vissée radialement à travers la douille, cette vis emprisonnant l'oreille 10 entre elle-même et le relief 17.

Enfin, la manchette 6 est enfilée sur la douille et rétreinte thermiquement, de façon à enserrer la douille et les parties adjacentes de l'embout et du corps de vanne. En variant, la manchette 6 peut être constituée d'un matériau élastique.

L'extrémité 11 de l'embout est alors reliée bout à bout au tube 2, par exemple par "soudure au miroir", c'est-à-dire en chauffant simultanément les deux tranches d'extrémité au moyen d'une plaque chauffante puis en les pressant l'une contre l'autre. En variante, le raccordement de l'embout au tube peut être réalisé par d'autres moyens, par exemple avec un manchon de raccordement.

L'embout 3 ne subit pas de contrainte notable lors de son montage, et est directement supporté par le bout uni 8, lequel peut être brut de fonderie. L'embout 3 peut ainsi, sans pièce de support interne et sans réduction du diamètre utile de la canalisation, supporter longtemps des conditions de service relativement sévères telles que des variations de température répétées.

Si nécessaire, on peut démonter facilement l'ensemble, en découpant l'embout, en retirant la manchette 6 et la vis 18, et en déverrouillant par rotation inverse la douille 5.

En variante, la vis 18 peut être remplacée par d'autres moyens anti-rotation, tels qu'une goupille, un rivet, un collage, etc.

## Revendications

**1.-** Dispositif de raccordement d'un bout uni (8) d'un accessoire de canalisation métallique (1) à un tube en matière plastique (2), comprenant :
- des premiers moyens de fixation (10) solidaires de l'accessoire de canalisation métallique (1) ;
- un embout de liaison (3) en matière plastique comportant une tulipe (12) adaptée pour s'emboîter sur le bout uni (8) ;
- des moyens (4, 14) assurant l'étanchéité entre la tulipe et le bout uni ; et
- une douille (5) adaptée pour coiffer la tulipe cette douille comprenant d'une part une collerette intérieure (15) de retenue de l'embout (3), coopérant avec l'épaulement d'extrémité (13) de la tulipe, et d'autre part des seconds moyens de fixation (16) adaptés pour coopérer avec les premiers moyens de fixation.

**2.-** Dispositif suivant la revendication 1, caractérisé en ce que les premiers et seconds moyens de fixation (10, 16) définissent un système à baïonnette.

**3.-** Dispositif suivant la revendication 2, caractérisé en ce le système à baïonnette (10, 16) est complété par des moyens (18) interdisant la rotation inverse de la douille (5).

**4.-** Dispositif suivant la revendication 3, caractérisé en ce que lesdits moyens (18) interdisant la rotation inverse de la douille comprennent, sur l'un des deux éléments raccordés par le système à baïonnette (10, 16), une butée (17) de rotation dans un sens et un organe rapporté (18) empêchant la rotation inverse.

**5.-** Dispositif suivant la revendication 4, caractérisé en ce que ledit organe rapporté (18) est amovible.

**6.-** Dispositif suivant la revendication 4, caractérisé en ce que ledit organe rapporté (18) est une vis, une goupille, un rivet ou un collage.

**7.-** Dispositif suivant la revendication 3, caractérisé en ce que lesdits moyens (18) interdisant la rotation inverse de la douille (5) sont adaptés pour interdire positivement cette rotation inverse.

**8.-** Dispositif suivant l'une quelconque des revendications 1 à 3, caractérisé en ce que les moyens (4, 14) assurant l'étanchéité comprennent une gorge (14) ménagée dans la paroi intérieure de la tulipe (12) et une garniture annulaire d'étanchéité (4) logée dans cette gorge.

**9.-** Dispositif suivant l'une quelconque des revendications 1 à 7, caractérisé en ce qu'il comprend en outre une manchette de protection (6) enserrant la douille (5) et les parties adjacentes de l'accessoire de canalisation (1) et de l'embout (3).

**10.-** Dispositif suivant l'une quelconque des revendications 1 à 8, caractérisé en ce que l'accessoire de canalisation (1) est un corps de vanne en fonte en forme générale de T, avec ledit bout uni (8) à l'extrémité d'une branche du T.
